# EUROPÄISCHE PATENTANMELDUNG

(11) **EP 4 582 911 A1**
(43) Veröffentlichungstag der Anmeldung: **09.07.2025**
(21) Anmeldenummer: 24218971.0
(22) Anmeldetag: 11.12.2024
(51) Int. Cl.: G06F 3/0346, G06F 3/01, H04W 4/80

(54) **VERFAHREN UND STEUEREINHEIT ZUM ERKENNEN EINES NUTZERS EINES GERÄTS UND GERÄT MIT STEUEREINHEIT**

(30) Priorität: 05.01.2024 DE 102024100256
(71) Anmelder: Miele & Cie. KG, 33332 Gütersloh (DE)
(72) Erfinder: Carsten, Daniel, 33615 Bielefeld (DE); Strothmann, Jörn, 33829 Borgholzhausen (DE); Kohnert, Lars, 33659 Bielefeld (DE)

(57) **Zusammenfassung**

Der hier vorgestellte Ansatz betrifft ein Verfahren zum Erkennen eines Nutzers eines Geräts (100). Das Verfahren umfasst einen Schritt des Einlesens von ersten Bewegungsdaten (115) von einem Bewegungssensor des Geräts (100) an eine Auswerteeinheit des Gerätes (100). Die ersten Bewegungsdaten (115) repräsentieren eine Bewegung des Nutzers. Das Verfahren umfasst ferner einen Schritt des Empfangens von zweiten Bewegungsdaten (140) von dem Mobilgerät (145) durch eine Empfangseinheit. Die zweiten Bewegungsdaten (140) repräsentieren eine Bewegung des Nutzers. Das Verfahren umfasst weiterhin einen Schritt des Vergleichens der ersten Bewegungsdaten (115) mit den zweiten Bewegungsdaten (140), um den Nutzer zu erkennen, wenn die ersten Bewegungsdaten (115) in einem vorbestimmten Verhältnis zu den zweiten Bewegungsdaten (140) stehen.

## Beschreibung

Der hier vorgestellte Ansatz betrifft ein Verfahren und eine Steuereinheit zum Erkennen eines Nutzers eines Geräts und ein Gerät mit einer Steuereinheit gemäß den Hauptansprüchen.

Zur Erkennung und Lokalisierung eines Nutzers können Sensorlösungen wie Radar verwendet werden.

Der hier vorgestellte Ansatz stellt sich die Aufgabe, ein verbessertes Verfahren und eine verbesserte Steuereinheit zum Erkennen eines Nutzers eines Geräts und ein verbessertes Gerät mit einer Steuereinheit zu schaffen.

Gemäß dem hier vorgestellten Ansatz wird diese Aufgabe durch ein Verfahren zum Erkennen eines Nutzers eines Geräts und ein Gerät mit einer Steuereinheit mit den Schritten bzw. Merkmalen der Hauptansprüche gelöst. Vorteilhafte Ausgestaltungen und Weiterbildungen des hier vorgestellten Ansatzes ergeben sich aus den nachfolgenden Unteransprüchen.

Ein Verfahren zum Erkennen eines Nutzers eines Geräts umfasst einen Schritt des Einlesens von ersten Bewegungsdaten von einem Bewegungssensor des Geräts an eine Auswerteeinheit des Gerätes. Die ersten Bewegungsdaten repräsentieren eine Bewegung des Nutzers. Das Verfahren umfasst zudem einen Schritt des Empfangens von zweiten Bewegungsdaten von dem Mobilgerät durch eine Empfangseinheit. Die zweiten Bewegungsdaten repräsentieren eine Bewegung des Nutzers. Das Verfahren umfasst außerdem einen Schritt des Vergleichens der ersten Bewegungsdaten mit den zweiten Bewegungsdaten, um den Nutzer zu erkennen, wenn die ersten Bewegungsdaten in einem vorbestimmten Verhältnis zu den zweiten Bewegungsdaten stehen.

Unter einem Gerät kann hierbei insbesondere ein Hausgerät wie etwa ein Ofen, ein Backofen oder ein Mikrowellenherd verstanden werden. Als ein Bewegungssensor kann allgemein ein Sensor, der eine Bewegung oder Bewegungen erkennen kann, verstanden werden. Der Bewegungssensor kann zum Beispiel als Beschleunigungssensor und/oder Gyrosensor und/oder Magnetfeldsensor ausgeführt sein. Der Bewegungssensor kann erste Bewegungsdaten an eine Auswerteeinheit des Geräts senden. Unter ersten Bewegungsdaten können dabei Daten verstanden werden, die eine Bewegung oder einen Bewegungsablauf des Nutzers repräsentieren.

Als ein Mobilgerät kann hierbei insbesondere ein Smartphone oder eine Smartwatch oder ein Wearable oder ein Computer verstanden werden. Das Mobilgerät sendet zweite Bewegungsdaten an eine Empfangseinheit des Geräts. Unter zweiten Bewegungsdaten können dabei Daten verstanden werden, die eine Bewegung oder einen Bewegungsablauf des Nutzers repräsentieren.

Das Gerät ist ausgebildet, um die ersten Bewegungsdaten mit den zweiten Bewegungsdaten, beispielsweise in der Auswerteeinheit zu vergleichen, um den Nutzer zu erkennen. Für diesen Fall stehen die ersten Bewegungsdaten in einem vorbestimmten Verhältnis zu den zweiten Bewegungsdaten. Dies kann insbesondere bedeuten, dass die ersten Bewegungsdaten mit den zweiten Bewegungsdaten identisch oder innerhalb eines Toleranzbereichs gleich sind, also übereinstimmen oder zumindest sehr ähnlich sind. Dies bedeutet, dass das Gerät und das Mobilgerät dieselbe Bewegung oder denselben Bewegungsablauf des Nutzers erkennen können, beispielsweise unabhängig voneinander.

Der hier vorgestellte Ansatz beruht auf der Erkenntnis, dass ein Nutzer eines Geräts zuverlässig, komfortabel, praktisch und kostengünstig erkannt werden kann, wenn die ersten Bewegungsdaten des Geräts mit den zweiten Bewegungsdaten des Mobilgeräts verglichen und als im Wesentlichen übereinstimmend erkannt werden.

Der hier vorgestellte Ansatz ist dadurch von Vorteil, dass keine mitunter teuren zusätzlichen Sensoren zur Benutzererkennung im Gerät vorgesehen oder verbaut werden brauchen.

Gemäß einer Ausführungsform kann im Schritt des Vergleichens ein Bewegungsablauf des Nutzers erkannt werden. Insbesondere kann dabei eine Bewegung des Nutzers zum Gerät hin oder vom Gerät weg erkannt werden. Dies ermöglicht ein zuverlässiges und effizientes Erkennen des Nutzers anhand dessen Bewegung oder Bewegungsablauf. Nähert sich der Nutzer dem Gerät an, kann das Gerät zum Beispiel davon ausgehen oder erwarten, dass der Nutzer das Gerät eventuell bedienen möchte. Entfernt sich der Nutzer vom Gerät, kann das Gerät zum Beispiel davon ausgehen oder erwarten, dass der Nutzer eine Bedienung des Geräts abgeschlossen hat.

Gemäß einer weiteren Ausführungsform können im Schritt des Vergleichens die ersten Bewegungsdaten und/oder die zweiten Bewegungsdaten mit zumindest einem in einem Speicher hinterlegten Bewegungsmuster verglichen werden. Insbesondere kann hierbei das Bewegungsmuster einem vorbestimmten Nutzer zugeordnet sein. Dies ermöglicht ein zuverlässiges und effizientes Erkennen und Zuordnen des Nutzers anhand dessen Bewegung oder Bewegungsablauf.

Gemäß einer weiteren Ausführungsform kann im Schritt des Vergleichens anhand von mehreren in dem Speicher hinterlegten Bewegungsmustern, die unterschiedlichen Nutzern zugeordnet sind, der vorbestimmte Nutzer ermittelt werden. Dies ermöglicht ein zuverlässiges und effizientes Erkennen und Zuordnen des Nutzers anhand dessen Bewegung oder Bewegungsablauf.

Gemäß einer weiteren Ausführungsform kann der Schritt des Empfangens unter Verwendung einer WLAN-Verbindung und/oder einer Bluetooth-Verbindung und/oder einer Cloudverbindung und/oder einer Anwendungsverbindung und/oder einer UWB-Verbindung durchgeführt werden. Dies ermöglicht eine sichere, praktische und nutzerfreundliche Verbindung zwischen dem Gerät und dem Mobilgerät. Die Empfangseinheit kann die zweiten Bewegungsdaten von dem Mobilgerät drahtlos bzw. über eine Funkverbindung und somit für den Nutzer komfortabel empfangen.

Gemäß einer weiteren Ausführungsform kann der Schritt des Einlesens durchgeführt werden, wenn der Nutzer sich in einem Näherungsbereich des Geräts befindet. Diese Ausführungsform ermöglicht das Einlesen der ersten Bewegungsdaten erst in einem vergleichsweise nahen Bereich des Geräts, sofern der Näherungsbereich einen solchen abdeckt, in dem der Bewegungssensor die ersten Bewegungsdaten bereitstellt. Hierdurch kann ein dauerhafter, energieaufwendiger Betrieb eines Empfangsmoduls vermieden werden.

Gemäß einer weiteren Ausführungsform können im Schritt des Einlesens und/oder im Schritt des Empfangens und/oder im Schritt des Vergleichens die ersten Bewegungsdaten und/oder die zweiten Bewegungsdaten mit zumindest je einem Zeitstempel eingelesen und/oder empfangen und/oder verglichen werden. Der Zeitstempel kann zumindest eine Zeitinformation repräsentieren. Dies ermöglicht ein Einlesen und/oder Empfangen und/oder Vergleichen der Bewegungsdaten zum Beispiel über eine Cloud oder einen anderen Speicher. Auf diese Weise können auch bei geringen Latenzen, also geringen Verzögerungszeiten, von beispielsweise einer Sekunde zeitlich zusammengehörige Bewegungsdaten verglichen werden.

Gemäß einer weiteren Ausführungsform können im Schritt des Empfangens die zweiten Bewegungsdaten von einem Beschleunigungssensor und/oder Gyrosensor und/oder Magnetfeldsensor empfangen werden. Eine solche Ausführungsform bietet mehrere mögliche präzise arbeitende Sensoren zur Auswahl, mittels derer die zweiten Bewegungsdaten erfasst oder empfangen werden können.

Gemäß einer weiteren Ausführungsform können im Schritt des Einlesens die ersten Bewegungsdaten von einem Bewegungssensor eines Ofens und/oder eines Backofens und/oder einer Mikrowelle eingelesen werden. Zusätzlich oder alternativ können im Schritt des Empfangens die zweiten Bewegungsdaten von einem als Smartphone und/oder Smartwatch und/oder Wearable und/oder Computer ausgebildeten Mobilgerät empfangen werden. Zusätzlich oder alternativ können im Schritt des Vergleichens die ersten Bewegungsdaten und die zweiten Bewegungsdaten in der Auswerteeinheit miteinander verglichen werden. Diese Ausführungsform bietet die Möglichkeit, einen oder mehrere der Schritte mit verschiedenen Geräten bzw. Mobilgeräten auszuführen. Der Nutzer kann somit entscheiden, welche Geräte bzw. Mobilgeräte er zu diesem Zweck miteinander verbinden oder koppeln möchte. Das Mobilgerät kann hierbei zum Beispiel als ein bereits vorhandenes oder verfügbares Wearable ausgeführt sein, welches der Nutzer bereits besitzt, benutzt oder trägt.

Der hier vorgestellte Ansatz schafft ferner eine Steuereinheit, die ausgebildet ist, um die Schritte einer Variante eines hier vorgestellten Verfahrens in entsprechenden Einheiten durchzuführen, anzusteuern bzw. umzusetzen. Auch durch diese Ausführungsvariante des hier vorgestellten Ansatzes in Form einer Steuereinheit kann die dem hier vorgestellten Ansatz zugrunde liegende Aufgabe schnell und effizient gelöst werden.

Die Steuereinheit kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Steuereinheit einlesbares Sensorsignal darstellen. Ein Ausgangssignal kann ein Steuersignal oder ein Datensignal darstellen, das an einer Ausgangsschnittstelle der Steuereinheit bereitgestellt werden kann. Die Steuereinheit kann ausgebildet sein, um die Ausgangssignale unter Verwendung einer in Hardware oder Software umgesetzten Verarbeitungsvorschrift zu bestimmen. Beispielsweise kann die Steuereinheit dazu eine Logikschaltung, einen integrierten Schaltkreis oder ein Softwaremodul umfassen und beispielsweise als ein diskretes Bauelement realisiert sein oder von einem diskreten Bauelement umfasst sein.

Gemäß einer weiteren Ausführungsform kann auch ein Gerät vorgesehen sein, das eine Variante der hier vorgestellten Steuereinheit aufweist. Auch durch diese Ausführungsvariante des hier vorgestellten Ansatzes in Form eines Geräts mit einer Steuereinheit kann die dem hier vorgestellten Ansatz zugrunde liegende Aufgabe schnell und effizient gelöst werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Steuereinheit ausgeführt, so kann das Programmprodukt oder Programm zur Durchführung, Umsetzung und/oder Ansteuerung der Schritte des Verfahrens gemäß einer der hier beschriebenen Ausführungsformen verwendet werden.

Auch wenn der beschriebene Ansatz anhand eines Haushaltgeräts beschrieben wird, kann der hier beschriebene Ansatz entsprechend im Zusammenhang mit einem gewerblichen oder professionellen Gerät eingesetzt werden.

Ausführungsbeispiele des hier vorgestellten Ansatzes sind in den Zeichnungen rein schematisch dargestellt und werden nachfolgend näher beschrieben. Es zeigt
- Figur 1: eine schematische Darstellung eines Geräts gemäß einem Ausführungsbeispiel;
- Figur 2: eine schematische Darstellung eines Geräts gemäß einem Ausführungsbeispiel;
- Figur 3: in einer linken Teildarstellung ein Schaubild eines Geräts gemäß einem Ausführungsbeispiel und in einer rechten Teildarstellung ein Schaubild eines Mobilgeräts zur Verwendung mit einem Gerät gemäß einem Ausführungsbeispiel;
- Figur 4: eine schematische Darstellung eines Geräts gemäß einem Ausführungsbeispiel;
- Figur 5: in einer linken Teildarstellung ein Schaubild eines Geräts gemäß einem Ausführungsbeispiel und in einer rechten Teildarstellung ein Schaubild eines Mobilgeräts zur Verwendung mit einem Gerät gemäß einem Ausführungsbeispiel; und
- Figur 6: ein Ausführungsbeispiel eines Ablaufdiagramms eines Verfahrens zum Erkennen eines Nutzers eines Geräts.

Gleiche oder ähnliche Bezugszeichen werden in der nachfolgenden Beschreibung für gleiche oder ähnliche Elemente verwendet, wobei auf eine wiederholte Erläuterung der Funktion dieser Elemente aus Gründen der Übersichtlichkeit verzichtet wird.

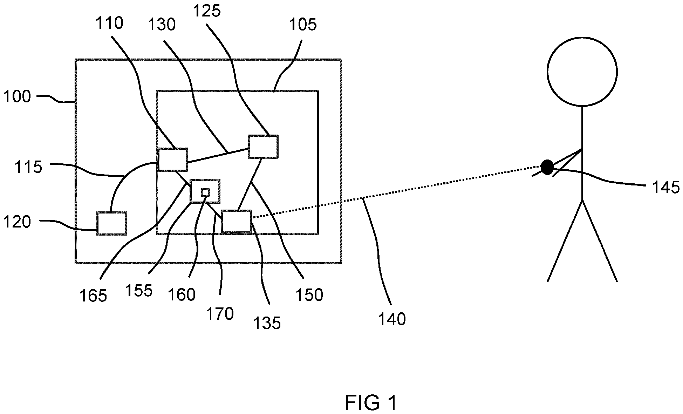

Figur 1 zeigt eine schematische Darstellung eines Geräts 100 gemäß einem Ausführungsbeispiel. Bei dem Gerät 100 handelt es sich beispielhaft um einen Ofen oder Backofen. Alternativ handelt es sich bei dem Gerät um einen Mikrowellenherd oder ganz allgemein um ein Hausgerät. Denkbar ist auch, dass es sich bei dem Gerät um ein professionelles wie beispielsweise einem Industriebackofen oder einem Großraumsterilisator handeln kann.

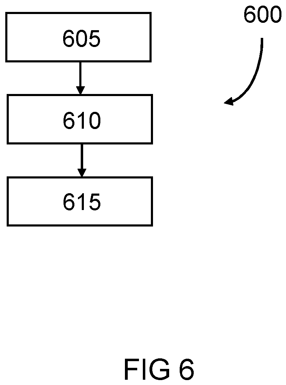

Das Gerät 100 umfasst eine Steuereinheit 105, mittels derer sich die Schritte des in Figur 6 beschriebenen Verfahrens zum Erkennen eines Nutzers des Geräts 100 in entsprechenden Einheiten ausführen und/oder ansteuern lassen.

Dazu umfasst die Steuereinheit 105 eine Einleseeinheit 110 zum Einlesen von ersten Bewegungsdaten 115 von einem Bewegungssensor 120 des Geräts 100 an eine Auswerteeinheit 125 des Gerätes 100. Die ersten Bewegungsdaten 115 repräsentieren eine Bewegung des Nutzers. Dabei handelt es sich beispielsweise um Bewegungen der Gliedmaßen zueinander, die der Nutzer vollführt, wenn er läuft oder geht. Alternativ oder zusätzlich kann auch eine Entfernung von einem oder mehreren Gliedmaßen des Nutzers zum Gerät erfasst werden. Die Auswerteeinheit 125 liest die ersten Bewegungsdaten 115 des Bewegungssensors 120 beispielhaft dann ein, wenn der Nutzer sich in einem Näherungsbereich des Geräts 100 befindet. Gemäß einem Ausführungsbeispiel liest die Auswerteeinheit 125 die ersten Bewegungsdaten 115 des Bewegungssensors 120 mit einem Zeitstempel 130 ein. Der Zeitstempel 130 repräsentiert dabei eine Zeitinformation.

Die Steuereinheit 105 umfasst auch eine Empfangseinheit 135.

Mittels der Empfangseinheit 135 werden zweite Bewegungsdaten 140 von einem Mobilgerät 145 empfangen. Die zweiten Bewegungsdaten 140 repräsentieren eine Bewegung des Nutzers. Dabei handelt es sich beispielsweise um Bewegungen der Gliedmaßen, die der Nutzer vollführt, wenn er läuft oder geht. Hierzu umfasst das Mobilgerät 145 einen Beschleunigungssensor, Gyrosensor oder Magnetfeldsensor. Gemäß weiteren Ausführungsbeispielen ist das Mobilgerät 145 als ein Smartphone oder eine Smartwatch oder ein Wearable oder ein Computer ausgebildet.

Die Empfangseinheit 135 empfängt die zweiten Bewegungsdaten 140 von dem Mobilgerät 145 zum Beispiel unter Verwendung einer WLAN-Verbindung. Eine solche WLAN-Verbindung wird beispielsweise mittels eines WLAN-Netzwerks hergestellt. Gemäß einem anderen Ausführungsbeispiel empfängt die Empfangseinheit 135 die zweiten Bewegungsdaten 140 unter Verwendung einer Bluetooth-Verbindung. Eine derartige Bluetooth-Verbindung wird beispielsweise zwischen dem Mobilgerät 145 und dem Gerät 100 bzw. der Empfangseinheit 135 des Gerätes 100 hergestellt. Gemäß einem weiteren Ausführungsbeispiel empfängt die Empfangseinheit 135 die zweiten Bewegungsdaten 140 unter Verwendung einer Cloudverbindung und einer Anwendungsverbindung von dem Mobilgerät 145, was jedoch aus Gründen der Übersichtlichkeit in der Figur 1 nicht näher dargestellt ist. Eine solche Cloud- und Anwendungsverbindung wird beispielsweise zwischen einer Nutzerapplikation oder Nutzeranwendung des Mobilgeräts 145 und einer Cloud, einem Speicher oder einem Cloudspeicher des Geräts 100 hergestellt. Gemäß einem zusätzlichen Ausführungsbeispiel empfängt die Empfangseinheit 135 die zweiten Bewegungsdaten 140 unter Verwendung einer UWB-Verbindung. UWB steht hierbei für Ultra-Wideband oder Ultrabreitband. Eine derartige UWB-Verbindung wird beispielsweise zwischen dem Mobilgerät 145 und dem Gerät 100 hergestellt.

Gemäß einem Ausführungsbeispiel empfängt die Empfangseinheit 135 die zweiten Bewegungsdaten 140 von dem Mobilgerät 145 mit einem weiteren Zeitstempel 150. Der weitere Zeitstempel 150 repräsentiert dabei eine weitere Zeitinformation, beispielsweise einen Zeitpunkt, zu dem die weiteren Bewegungsdaten aufgezeichnet wurden.

Die Steuereinheit 105 umfasst auch eine Vergleichseinheit 155 zum Vergleichen der ersten Bewegungsdaten 115 mit den zweiten Bewegungsdaten 140, um den Nutzer zu erkennen, wenn die ersten Bewegungsdaten 115 in einem vorbestimmten Verhältnis zu den zweiten Bewegungsdaten 140 stehen. Dies bedeutet lediglich beispielhaft, dass die ersten Bewegungsdaten 115 mit den zweiten Bewegungsdaten 140 identisch oder innerhalb eines Toleranzbereichs von beispielsweise 10 Prozent des möglichen oder tatsächlichen Bewegungswegs gleich sind, also (im Wesentlichen) übereinstimmen. Als erste Bewegungsdaten 115 oder zweite Bewegungsdaten 140 wird beispielhaft ein Bewegungsablauf bzw. Bewegungsweg von einem oder mehreren Körperteilen des Nutzers erkannt. Der Bewegungsablauf ist zum Beispiel eine Bewegung des Nutzers zum Gerät 100 hin oder vom Gerät 100 weg.

Die ersten Bewegungsdaten 115 und/oder die zweiten Bewegungsdaten 140 werden zum Beispiel mit zumindest einem in einem Speicher 160 hinterlegten Bewegungsmuster verglichen. Das Bewegungsmuster ist insbesondere einem (vor-)bestimmten Nutzer zugeordnet. Gemäß einem Ausführungsbeispiel wird anhand von mehreren in dem Speicher 160 hinterlegten Bewegungsmustern, die unterschiedlichen Nutzern zugeordnet sind, der (vor-) bestimmte Nutzer ermittelt.

Gemäß einem Ausführungsbeispiel werden die ersten Bewegungsdaten 115 mit einem zusätzlichen Zeitstempel 165 verglichen. Der zusätzliche Zeitstempel 165 repräsentiert hierbei eine zusätzliche Zeitinformation.

Gemäß einem weiteren Ausführungsbeispiel werden die zweiten Bewegungsdaten 140 mit einem extra Zeitstempel 170 verglichen. Der extra Zeitstempel 170 repräsentiert hierbei eine extra Zeitinformation, beispielsweise einen Zeitpunkt oder einen Zeitraum, zu dem der den zweiten Bewegungsdaten zugeordnete zweite Bewegungsablauf oder eine Distanz des Nutzers zum Gerät aufgezeichnet wurde.

In anderen Worten soll das Gerät 100, das über den Bewegungssensor 120, hier auch MotionReact-Sensorik genannt, verfügt, die einen Nutzer nicht erkennen kann, mit dem hier vorgelegten Ansatz in die Lage versetzt werden, den Nutzer über das Mobilgerät 145 wie etwa ein Wearable zu erkennen und die über das Mobilgerät 145 gemessenen beispielhaften Bewegungsmuster, also die zweiten Bewegungsdaten 140, mit den MotionReact-Sensordaten, also mit den ersten Bewegungsdaten 115, zu vergleichen, um auf eine Präsenz des erkannten Nutzers zu schließen.

Gemäß Ausführungsbeispielen funktioniert der dargelegte Ansatz mit einfachen Bewegungssensoren 120, beispielsweise mit den geplanten Ein-Zonen-ToF-Sensoren oder den eingeplanten Mehr-Zonen-ToF-Sensoren, die lediglich beispielhaft nicht über die Möglichkeit verfügen einen Nutzer zu erkennen. Für den Nutzer empfiehlt es sich insbesondere, ein bereits vorhandenes Mobilgerät 145, zum Beispiel ein Wearable, bei sich zu haben oder mitzuführen, welches beispielsweise die zweiten Bewegungsdaten 140 aufnimmt und an das Gerät 100 sendet, zum Beispiel über eine Cloud. Beispielhaft bedarf es außerdem keiner bisweilen teuren Sensorik zur Benutzererkennung.

Bereits bekannt sind singuläre Lösungen wie etwa Bewegungssensoren, beispielsweise umgesetzt mit einem Multizonen-Time-of-Flight-Sensor, der zum Beispiel eine Präsenz und grobe Lokalisierung des Nutzers in seinem Detektionsbereich wahrnimmt.

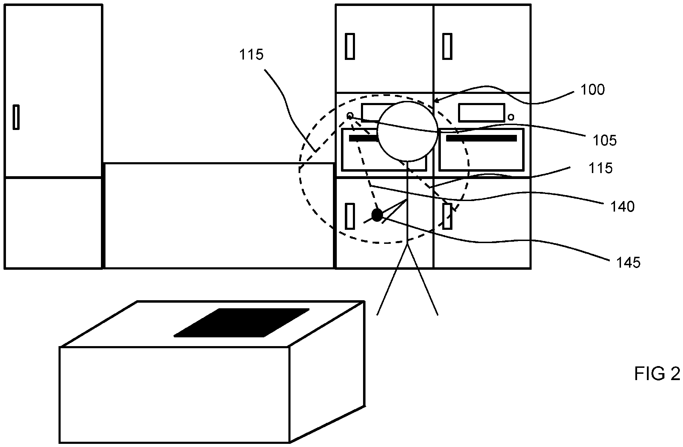

Figur 2 zeigt eine schematische Darstellung eines Geräts 100 gemäß einem Ausführungsbeispiel. Bei dem Gerät 100 handelt es sich beispielhaft um den in Figur 1 gezeigten Ofen oder Backofen. Alternativ handelt es sich bei dem Gerät 100 um einen Mikrowellenherd.

Das Gerät 100 umfasst die Steuereinheit 105, mittels derer sich die Schritte des in Figur 6 beschriebenen Verfahrens zum Erkennen des Nutzers des Geräts 100 in entsprechenden Einheiten ausführen und/oder ansteuern lassen.

Wenn sich der Nutzer dem Gerät 100 annähert und sich in dem Näherungsbereich des Geräts 100 befindet, liest die Steuereinheit 105 die ersten Bewegungsdaten 115 ein. Die ersten Bewegungsdaten 115 repräsentieren zum Beispiel die Bewegung des Nutzers, beispielsweise Bewegungen der Gliedmaßen, die der Nutzer im Nahbereich des Gerätes vollführt, wenn er läuft oder geht. Als erste Bewegungsdaten 115 wird beispielhaft ein Bewegungsablauf des Nutzers erkannt. Der Bewegungsablauf ist in dieser Figur 2 beispielhaft eine Bewegung des Nutzers zum Gerät 100 hin.

Mittels der Steuereinheit 105 werden die zweiten Bewegungsdaten 140 von dem Mobilgerät 145 empfangen. Die zweiten Bewegungsdaten 140 repräsentieren eine Bewegung des Nutzers. Dabei handelt es sich beispielsweise um Bewegungen der Gliedmaßen, die der Nutzer vollführt, wenn er läuft oder geht. Als zweite Bewegungsdaten 140 wird beispielhaft ein Bewegungsablauf des Nutzers erkannt. Der Bewegungsablauf ist in dieser Figur 2 beispielhaft die Bewegung des Nutzers zum Gerät 100 hin.

Die Steuereinheit 105 empfängt die zweiten Bewegungsdaten 140 von dem Mobilgerät 145 zum Beispiel unter Verwendung einer WLAN-Verbindung. Eine solche beispielhafte WLAN-Verbindung wird beispielsweise mittels eines WLAN-Netzwerks hergestellt. Gemäß einem anderen Ausführungsbeispiel empfängt die Steuereinheit 105 die zweiten Bewegungsdaten 140 unter Verwendung einer Bluetooth-Verbindung. Eine derartige Bluetooth-Verbindung wird beispielsweise zwischen dem Mobilgerät 145 und dem Gerät 100 hergestellt. Gemäß einem weiteren Ausführungsbeispiel empfängt die Steuereinheit 105 die zweiten Bewegungsdaten 140 unter Verwendung einer Cloudverbindung und einer Anwendungsverbindung. Eine solche Cloud- und Anwendungsverbindung wird beispielsweise zwischen einer Nutzerapplikation oder Nutzeranwendung des Mobilgeräts 145 und einer Cloud, einem Speicher oder einem Cloudspeicher des Geräts 100 hergestellt. Gemäß einem zusätzlichen Ausführungsbeispiel empfängt die Steuereinheit 105 die zweiten Bewegungsdaten 140 unter Verwendung einer UWB-Verbindung. UWB steht hierbei für Ultra-Wideband oder Ultrabreitband. Eine derartige UWB-Verbindung wird beispielsweise zwischen dem Mobilgerät 145 und dem Gerät 100 hergestellt.

Anders ausgedrückt werden die Distanzwerte des Bewegungssensors 120, beispielsweise des MotionReact Sensors, mit den Beschleunigungssensordaten, also den zweiten Bewegungsdaten 140, des Mobilgeräts 145, zum Beispiel der Smart Watch, verglichen. Der Nutzer nähert sich dem Gerät 100 an, beispielsweise dem Ofen, und bleibt vor diesem stehen (Distanzwerte). Das beispielhaft als Smart Watch ausgebildete Mobilgerät 145 erkennt eine Bewegung, welche zeitlich genau dann zur Ruhe kommt, wenn der Nutzer vor dem Gerät 100 stehen bleibt. Dabei wird insbesondere eine Synchronisation erkannt.

Anders formuliert erkennt der Bewegungssensor 120 im beispielhaft als Hausgerät ausgeführten Gerät 100 eine Präsenz einer Person, insbesondere des Nutzers. Der Bewegungssensor 120 erkennt beispielhaft eine Annäherung und damit zum Beispiel auch zumindest eine Bewegung des Nutzers. Um die Person, die sich dem Gerät 100 annähert, also in diesem Fall den Nutzer, erkennen zu können, wird lediglich beispielhaft nach Wearables oder smarten Devices oder anderen Mobilgeräten 145 in der Nähe gesucht, die der Nutzer bei sich tragen könnte. Dies könnte ein Smartphone oder eine Smartwatch sein. Beispielsweise über eine WLAN-Verbindung oder eine Bluetoothverbindung oder alternativ über eine Cloud und eine Verbindung zu einer auf dem Mobilgerät 145 befindlichen App, also Applikation oder Anwendung, wird eine Verbindung aufgebaut, über die die beispielhaften Sensordaten, also die Bewegungsdaten 115, 140, von zum Beispiel Beschleunigungssensoren, Gyrosensoren oder Magnetfeldsensoren und zusätzlich oder alternativ weiteren Sensoren, die auf Bewegungen des Nutzers schließen, abgerufen werden. Insbesondere anhand dieser Daten, also anhand der Sensordaten bzw. der Bewegungsdaten 115, 140, wird beispielsweise auf eine Bewegung des Nutzers, der das Mobilgerät 145 trägt, geschlossen. Die Bewegung wird mit der Annäherung durch den Bewegungssensor 120 abgeglichen. Stimmen die Bewegungsdaten 115, 140 überein, kann zum Beispiel auf den Nutzer geschlossen werden, der über das Mobilgerät 145 identifiziert wird. Die Bewegung kann im Detektionsbereich, also im Näherungsbereich, des Bewegungssensors 120 verglichen werden. So werden zum Beispiel beide Bewegungen eine Ruheposition anzeigen, sobald der Nutzer in einem Bedienabstand des Gerätes 100 zum Halten gekommen ist. Wenn sich der Nutzer anschließend aus dem Detektionsbereich, also aus dem Näherungsbereich, des Bewegungssensors 120 entfernt, ist der Nutzer gemäß einem Ausführungsbeispiel dennoch getaggt und wird als jede Person gespeichert, die mit dem Gerät 100 innerhalb eines bestimmten Zeitraums voraussichtlich interagiert. Die Annäherung kann dann beispielsweise (wieder) mit den zweiten Bewegungsdaten 140 des Mobilgeräts 145 abgeglichen werden, um zu verifizieren, dass es sich immer noch um denselben Nutzer handelt.

Gemäß Ausführungsbeispielen werden die Daten, also die Bewegungsdaten 115, 140, über eine lokale Nahbereichskommunikation, beispielsweise Bluetooth, UWB, oder WLAN zwischen den Geräten, also zwischen dem Gerät 100 und dem Mobilgerät 145, versendet, um zum Beispiel schnelle Bewegungsmuster miteinander vergleichen zu können. Da es aber auch Unternehmensstrategie sein kann, dass die Daten, also die Bewegungsdaten 115, 140, ausschließlich über eine Cloud versendet werden, um den Nutzer zum Vernetzen seiner Geräte zu motivieren, können die Bewegungsmuster oder Bewegungsdaten 115, 140 insbesondere zusätzlich mit Zeitstempeln 130, 150, 165, 170 versehen in kleineren Streams versendet werden, so dass lediglich beispielhaft auch bei Latenzen von zum Beispiel einer Sekunde (1s) zeitlich zusammengehörige Bewegungsmuster verglichen werden.

Ein herkömmlicher Bewegungssensor erkennt einen Nutzer normalerweise nicht, sondern nimmt nur die Präsenz irgendeines Nutzers im (schmalen) Detektionsbereich eines bekannten Geräts wahr. Der herkömmliche Bewegungssensor kann aber dabei helfen, den Nutzer über ein vom Nutzer verwendetes Mobilgerät, beispielsweise ein getragenes Wearable, insbesondere anhand seiner Bewegungsmuster vor dem bereits bekannten Gerät zu lokalisieren und zum Beispiel (anschließend) zu taggen und im Raum zu verfolgen.

Eine Präsenzerkennung eines Nutzers aus einem herkömmlichen Gerät heraus, insbesondere einem Hausgerät, erkennt den Nutzer oftmals nicht, sofern es sich nicht um ein hochauflösendes Kamerasystem zwecks Präsenzerkennung handelt. Selbst bei einem solchen hochauflösenden Kamerasystem des herkömmlichen Geräts ist eine Erkennung des Nutzers aber zumeist auf ein Sichtfeld, auch als Field-of-View bezeichnet, beschränkt.

Eine bekannte Bewegungsmustererkennung und Identifikation des Nutzers anhand eines getragenen Wearables ist häufig delokalisiert, also keiner konkreten Position zugeordnet. Ein bekanntes Gerät weiß in der Regel nicht, dass sich der Nutzer in der Nähe befindet, sofern diese Information nicht zum Beispiel durch eine verbaute Indoor-Lokalisierung, beispielsweise über UWB, also Ultra-Wideband bzw. Ultrabreitband, ergänzt wird.

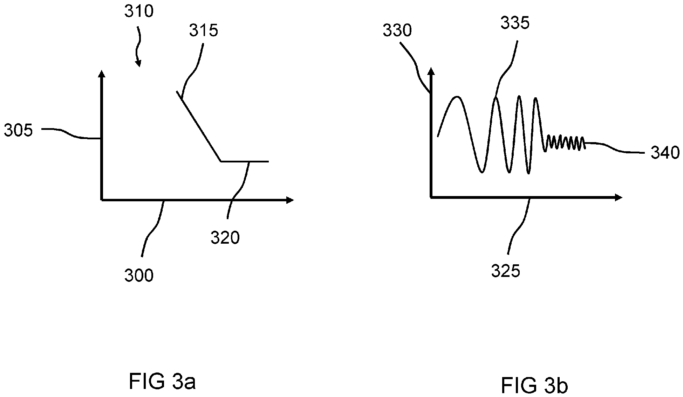

Figur 3 zeigt in einer linken Teildarstellung (Figur 3a) ein erstes Diagramm eines Abstands des Nutzers vom Gerät über die Zeit gemäß einem Ausführungsbeispiel und in einer rechten Teildarstellung (Figur 3b) ein Schaubild zur Darstellung von Beschleunigungswerten eines Mobilgeräts bzw. eines Glieds des Nutzers über die Zeit zur Verwendung mit einem Gerät gemäß einem weiteren Ausführungsbeispiel. Bei dem Gerät handelt es sich beispielhaft um den in Figur 2 gezeigten Ofen oder Backofen. Alternativ handelt es sich bei dem Gerät um einen Mikrowellenherd. In dieser Figur 3 wird beispielhaft eine Bewegung oder ein Bewegungsablauf des Nutzers des in Figur 2 illustrierten Geräts beschrieben.

In der linken Teildarstellung (Figur 3a) ist eine Präsenzerkennung durch das Gerät, beispielsweise den Ofen, gezeigt. Dazu ist an der Abszisse eine Zeit 300 und an der Ordinate eine Distanz 305 vom Nutzer zum Gerät aufgetragen. Die Abszisse 300 stellt hier exemplarisch die Zeit dar, in der sich der Nutzer aus der Distanz 305 dem Gerät annähert. In einem linken Bereich 310 des Schaubilds ist der Nutzer außerhalb eines Sichtfelds des Geräts. Das Gerät erkennt deshalb keine Präsenz des Nutzers. In einem mittleren Bereich 315 des Schaubilds nähert sich der Nutzer dem Gerät, sodass die Distanz 305 des Nutzers vom Gerät im Laufe der Zeit 300 geringer wird. In einem rechten Bereich 320 des Schaubilds bleibt der Nutzer in einer bestimmten Distanz 305 vom Gerät entfernt vor diesem stehen und verweilt dort für eine bestimmte Zeit 300.

In der rechten Teildarstellung (Figur 3b) ist ein beispielhaftes Sensorsignal eines Bewegungssensors des Mobilgeräts, beispielsweise der Smartwatch, gezeigt. Dazu ist an der Abszisse eine Zeit 325 und an der Ordinate eine Beschleunigung 330 aufgetragen. Die Zeit 330 stellt hier exemplarisch die Zeit dar, in der sich der Nutzer mit einer gewissen Beschleunigung 330 dem Gerät annähert. Die Beschleunigung 330 wird durch zumindest eine Bewegung oder einen Bewegungsablauf des Nutzers verursacht. In einem linken Abschnitt 335 des Schaubilds bewegt sich der Nutzer bzw. ist der Nutzer in Bewegung, was die großen Beschleunigungswerte 330 erzeugt. In einem rechten Abschnitt 340 des Schaubilds bleibt der Nutzer vor dem Gerät stehen und verweilt dort für eine bestimmte weitere Zeit 325. Im rechten Abschnitt 340 ist die Beschleunigung 330 (nur noch) gering, da sich der Nutzer in dieser weiteren Zeit 325 kaum noch bewegt, solange er sich vor dem Gerät aufhält.

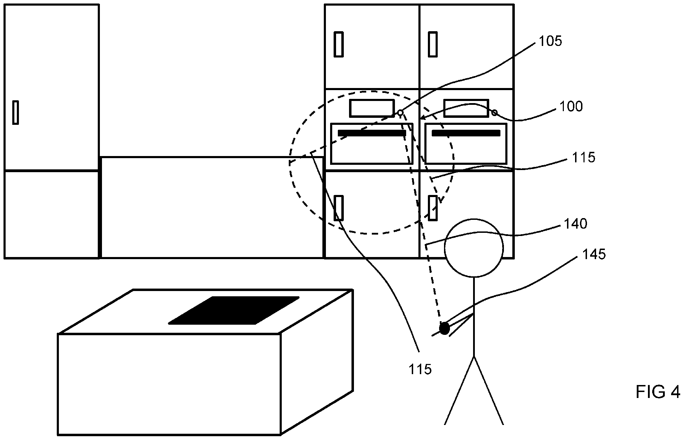

Figur 4 zeigt eine schematische Darstellung eines Geräts 100 gemäß einem Ausführungsbeispiel. Bei dem Gerät 100 handelt es sich beispielhaft um den in Figur 2 gezeigten Ofen oder Backofen. Alternativ handelt es sich bei dem Gerät 100 um einen Mikrowellenherd.

Das Gerät 100 umfasst die Steuereinheit 105, mittels derer sich die Schritte des in Figur 6 beschriebenen Verfahrens zum Erkennen des Nutzers des Geräts 100 in entsprechenden Einheiten ausführen und/oder ansteuern lassen.

Wenn sich der Nutzer dem Gerät 100 annähert und sich in dem Näherungsbereich des Geräts 100 befindet, liest die Steuereinheit 105 die ersten Bewegungsdaten 115 ein. Die ersten Bewegungsdaten 115 repräsentieren zum Beispiel die Bewegung des Nutzers, beispielsweise Bewegungen der Gliedmaßen, die der Nutzer vollführt, wenn er läuft oder geht. Als erste Bewegungsdaten 115 wird beispielhaft ein Bewegungsablauf des Nutzers erkannt. Der Bewegungsablauf ist in dieser Figur 2 beispielhaft eine Bewegung des Nutzers zum Gerät 100 hin.

Mittels der Steuereinheit 105 werden die zweiten Bewegungsdaten 140 von dem Mobilgerät 145 an das Gerät 100 ausgesandt. Die zweiten Bewegungsdaten 140 repräsentieren eine Bewegung des Nutzers. Dabei handelt es sich beispielsweise um Bewegungen der Gliedmaßen, die der Nutzer vollführt, wenn er läuft oder geht. Als zweite Bewegungsdaten 140 wird beispielhaft ein Bewegungsablauf des Nutzers erkannt. Der Bewegungsablauf ist in dieser Figur 2 beispielhaft die Bewegung des Nutzers zum Gerät 100 hin.

Die Steuereinheit 105 empfängt die zweiten Bewegungsdaten 140 von dem Mobilgerät 145 zum Beispiel unter Verwendung einer WLAN-Verbindung. Eine solche WLAN-Verbindung wird beispielsweise mittels eines WLAN-Netzwerks hergestellt. Gemäß einem anderen Ausführungsbeispiel empfängt die Steuereinheit 105 die zweiten Bewegungsdaten 140 unter Verwendung einer Bluetooth-Verbindung. Eine derartige Bluetooth-Verbindung wird beispielsweise zwischen dem Mobilgerät 145 und dem Gerät 100 hergestellt. Gemäß einem weiteren Ausführungsbeispiel empfängt die Steuereinheit 105 die zweiten Bewegungsdaten 140 unter Verwendung einer Cloudverbindung und einer Anwendungsverbindung. Eine solche Cloud- und Anwendungsverbindung wird beispielsweise zwischen einer Nutzerapplikation oder Nutzeranwendung des Mobilgeräts 145 und einer Cloud, einem Speicher oder einem Cloudspeicher des Geräts 100 hergestellt. Gemäß einem zusätzlichen Ausführungsbeispiel empfängt die Steuereinheit 105 die zweiten Bewegungsdaten 140 unter Verwendung einer UWB-Verbindung. UWB steht hierbei für Ultrawideband oder Ultrabreitband. Eine derartige UWB-Verbindung wird beispielsweise zwischen dem Mobilgerät 145 und dem Gerät 100 hergestellt.

Mit anderen Worten entfernt sich der Nutzer (wieder) vom Gerät 100, wie etwa einem Ofen. Dieses Entfernen wird als erhöhte Beschleunigung von Gliedmaßen des Nutzers vom Bewegungssensor 120 erkannt. Synchron dazu wird somit auch eine Beschleunigung des Mobilgeräts 145 wie etwa der Smart Watch erkannt, über die weiterhin die Bewegungen des Nutzers, auch Bediener genannt, des Geräts 100 registriert werden können. Der Nutzer des Geräts 100 wird zudem auch als Nutzer des Mobilgeräts 145, beispielsweise als SmartWatch-Träger, identifiziert.

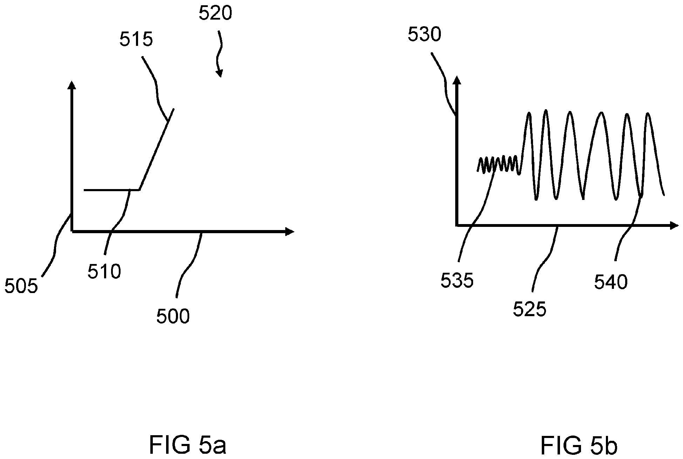

Figur 5 zeigt in einer linken Teildarstellung (Figur 5a) ein Schaubild eines Geräts gemäß einem Ausführungsbeispiel und in einer rechten Teildarstellung (Figur 5b) ein Schaubild eines Mobilgeräts zur Verwendung mit einem Gerät gemäß einem Ausführungsbeispiel. Bei dem Gerät handelt es sich beispielhaft um den in Figur 4 gezeigten Ofen oder Backofen. Alternativ handelt es sich bei dem Gerät um einen Mikrowellenherd. In dieser Figur 5 wird beispielhaft eine Bewegung oder ein Bewegungsablauf des Nutzers des in Figur 4 illustrierten Geräts beschrieben.

In der linken Teildarstellung (Figur 5a) ist eine Präsenzerkennung durch das Gerät, beispielsweise den Ofen, gezeigt. Dazu ist an der Abszisse eine Zeit 500 und an der Ordinate eine zusätzliche Distanz 505 aufgetragen. Die Zeit 500 stellt hier exemplarisch die Zeit dar, in der sich der Nutzer aus der zusätzlichen Distanz 505 vom Gerät entfernt. In einem zusätzlichen linken Bereich 510 des Schaubilds bleibt der Nutzer in einer bestimmten zusätzlichen Distanz 505 vom Gerät entfernt vor diesem stehen und verweilt dort für eine bestimmte zusätzliche Zeit 500. In einem zusätzlichen mittleren Bereich 515 des Schaubilds entfernt sich der Nutzer vom Gerät, sodass die zusätzliche Distanz 505 des Nutzers vom Gerät im Laufe der Zeit 500 größer wird. In einem zusätzlichen rechten Bereich 520 des Schaubilds ist der Nutzer außerhalb des Sichtfelds bzw. des Erfassungsbereichs des Geräts. Das Gerät erkennt deshalb keine Präsenz des Nutzers (mehr).

In der rechten Teildarstellung (Figur 5b) ist ein Bewegungssensor des Mobilgeräts, beispielsweise der Smartwatch, gezeigt. Dazu ist an der Abszisse eine Zeit 525 und an der Ordinate eine Beschleunigung 530 aufgetragen. Die Zeit 525 stellt hier exemplarisch die Zeit dar, in der sich der Nutzer mit einer gewissen extra Beschleunigung 530 vom Gerät entfernt. Die Beschleunigung 530 wird durch zumindest eine Bewegung oder einen Bewegungsablauf von einem oder mehreren Gliedmaßen des Nutzers verursacht. In einem linken Abschnitt 535 ist die Beschleunigung 530 gering, da sich der Nutzer in dieser Zeit 525 kaum bewegt, solange er sich vor dem Gerät aufhält und dort verweilt. In einem rechten Abschnitt 540 des Diagramms bewegt sich der Nutzer bzw. ist der Nutzer in Bewegung, solange er sich vom Gerät weg bewegt, was die Beschleunigung 530 erzeugt.

Figur 6 zeigt ein Ausführungsbeispiel eines Ablaufdiagramms eines Verfahrens 600 zum Erkennen eines Nutzers eines Geräts. Das Verfahren 600 umfasst einen Schritt 605 des Einlesens von ersten Bewegungsdaten von einem Bewegungssensor des Geräts an eine Auswerteeinheit des Gerätes. Die ersten Bewegungsdaten repräsentieren eine Bewegung des Nutzers. Das Verfahren 600 umfasst zudem einen Schritt 610 des Empfangens von zweiten Bewegungsdaten von dem Mobilgerät durch die Auswerteeinheit. Die zweiten Bewegungsdaten repräsentieren eine Bewegung des Nutzers. Das Verfahren 600 umfasst außerdem einen Schritt 615 des Vergleichens der ersten Bewegungsdaten mit den zweiten Bewegungsdaten, um den Nutzer zu erkennen, wenn die ersten Bewegungsdaten in einem vorbestimmten Verhältnis zu den zweiten Bewegungsdaten stehen.

Der offenbarte Ansatz kann alternativ als Benutzererkennung und -lokalisierung durch Bewegungsmuster und MotionReact bezeichnet und insbesondere in Geräten mit einem Bewegungssensor eingesetzt werden.

## Patentansprüche

1. Verfahren (600) zum Erkennen eines Nutzers eines Geräts (100), wobei das Verfahren (600) die folgenden Schritte aufweist:
- Einlesen (605) von ersten Bewegungsdaten (115) von einem Bewegungssensor (120) des Geräts (100) an eine Auswerteeinheit (125) des Gerätes (100), wobei die ersten Bewegungsdaten (115) eine Bewegung des Nutzers repräsentieren;
- Empfangen (610) von zweiten Bewegungsdaten (140) von einem Mobilgerät (145) durch eine Empfangseinheit (135), wobei die zweiten Bewegungsdaten (140) eine Bewegung des Nutzers repräsentieren; und
- Vergleichen (615) der ersten Bewegungsdaten (115) mit den zweiten Bewegungsdaten (140), um den Nutzer zu erkennen, wenn die ersten Bewegungsdaten (115) in einem vorbestimmten Verhältnis zu den zweiten Bewegungsdaten (140) stehen.

2. Verfahren (600) gemäß Anspruch 1, wobei im Schritt (615) des Vergleichens ein Bewegungsablauf des Nutzers erkannt wird, insbesondere wobei eine Bewegung des Nutzers zum Gerät (100) hin oder vom Gerät (100) weg erkannt wird.

3. Verfahren (600) gemäß einem der vorangegangenen Ansprüche, wobei im Schritt (615) des Vergleichens die ersten Bewegungsdaten (115) und/oder die zweiten Bewegungsdaten (140) mit zumindest einem in einem Speicher (160) hinterlegten Bewegungsmuster verglichen werden, insbesondere wobei das Bewegungsmuster einem vorbestimmten Nutzer zugeordnet ist.

4. Verfahren (600) gemäß Anspruch 3, wobei im Schritt (615) des Vergleichens anhand von mehreren in dem Speicher (160) hinterlegten Bewegungsmustern, die unterschiedlichen Nutzern zugeordnet sind, der vorbestimmte Nutzer ermittelt wird.

5. Verfahren (600) gemäß einem der vorangegangenen Ansprüche, wobei der Schritt (610) des Empfangens unter Verwendung einer WLAN-Verbindung und/oder einer Bluetooth-Verbindung und/oder einer Cloudverbindung und/oder einer Anwendungsverbindung und/oder einer UWB-Verbindung durchgeführt wird.

6. Verfahren (600) gemäß einem der vorangegangenen Ansprüche, wobei der Schritt (605) des Einlesens durchgeführt wird, wenn der Nutzer sich in einem Näherungsbereich des Geräts (100) befindet.

7. Verfahren (600) gemäß einem der vorangegangenen Ansprüche, wobei im Schritt (605) des Einlesens und/oder im Schritt (610) des Empfangens und/oder im Schritt (615) des Vergleichens die ersten Bewegungsdaten (115) und/oder die zweiten Bewegungsdaten (140) mit zumindest je einem Zeitstempel (130, 150, 165, 170) eingelesen und/oder empfangen und/oder verglichen werden, wobei der Zeitstempel (130, 150, 165, 170) zumindest eine Zeitinformation repräsentiert.

8. Verfahren (600) gemäß einem der vorangegangenen Ansprüche, wobei im Schritt (610) des Empfangens die zweiten Bewegungsdaten (140) von einem Beschleunigungssensor und/oder Gyrosensor und/oder Magnetfeldsensor empfangen werden.

9. Verfahren (600) gemäß einem der vorangegangenen Ansprüche, wobei im Schritt (605) des Einlesens die ersten Bewegungsdaten (115) von einem Bewegungssensor (120) eines Ofens und/oder eines Backofens und/oder einer Mikrowelle eingelesen werden und/oder im Schritt (610) des Empfangens die zweiten Bewegungsdaten (140) von einem als Smartphone und/oder Smartwatch und/oder Wearable und/oder Computer ausgebildeten Mobilgerät (145) empfangen werden und/oder im Schritt (615) des Vergleichens die ersten Bewegungsdaten (115) und die zweiten Bewegungsdaten (140) in der Auswerteeinheit (125) miteinander verglichen werden.

10. Steuereinheit (105), die ausgebildet ist, um die Schritte (605, 610, 615) des Verfahrens (600) gemäß einem der Ansprüche 1 bis 9 in entsprechenden Einheiten (110, 125, 135, 155) auszuführen und/oder anzusteuern.

11. Gerät (100) mit einer Steuereinheit (105) gemäß Anspruch 10.

12. Computer-Programmprodukt mit Programmcode zur Durchführung des Verfahrens (600) gemäß einem der Ansprüche 1 bis 9, wenn das Computer-Programmprodukt auf einer Steuereinheit (105) gemäß Anspruch 10 ausgeführt wird.
